(19) Europäisches Patentamt
European Patent Office
Office européen des brevets

(11) EP 2 621 972 B1

(12) # FASCICULE DE BREVET EUROPEEN

(45) Date de publication et mention de la délivrance du brevet:
**14.09.2016 Bulletin 2016/37**

(21) Numéro de dépôt: **11771254.7**

(22) Date de dépôt: **22.09.2011**

(51) Int Cl.:
*C08F 293/00* (2006.01) *C08F 2/38* (2006.01)
*C08F 4/40* (2006.01) *C08F 226/10* (2006.01)

(86) Numéro de dépôt international:
**PCT/FR2011/052185**

(87) Numéro de publication internationale:
**WO 2012/045944 (12.04.2012 Gazette 2012/15)**

(54) **POLYMÉRISATION RADICALAIRE CONTRÔLÉE DE N-VINYL LACTAMES EN MILIEU AQUEUX**

GESTEUERTE FREIE RADIKALISCHE POLYMERISATION VON N-VINYL-LACTAMEN IN EINEM WÄSSRIGEN MEDIUM

CONTROLLED FREE-RADICAL POLYMERIZATION OF N-VINYL LACTAMS IN AN AQUEOUS MEDIUM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.09.2010 FR 1057770**

(43) Date de publication de la demande:
**07.08.2013 Bulletin 2013/32**

(73) Titulaires:
- **Centre National de la Recherche Scientifique 75016 Paris (FR)**
- **RHODIA OPERATIONS 93306 Aubervilliers (FR)**

(72) Inventeurs:
- **DESTARAC, Mathias F-31000 Toulouse (FR)**
- **GUINAUDEAU, Aymeric F-72210 Louplande (FR)**
- **MAZIERES, Stéphane F-31320 Castanet-Tolosan (FR)**
- **WILSON, James 60580 Coye-La-Foret (FR)**

(56) Documents cités:
**EP-A1- 1 510 533**

- **HIN-ICHI YUSA,SHIGERU YAMAGO, MAKOTO SUGAHARA, SANAE MORIKAWA, TOHEI YAMAMOTO, YOTARO MORISHIMA: "Thermo-Responsive Diblock Copolymers of Poly(N-isopropylacrylamide) and Poly(N-vinyl-2-pyrroridone) Synthesized via Organotellurium-Mediated Controlled Radical Polymerization (TERP)", MACROMOLECULES, vol. 40, 7 octobre 2007 (2007-10-07), pages 5907-5915, XP002631832,**
- **WEI BAI1, LIANG ZHANG1, RUKE BAI1,*, GUANGZHAO ZHANG2: "A Very Useful Redox Initiator for Aqueous RAFT Polymerization of N-Isopropylacrylamide and Acrylamide at Room Temperature", MACROMOLECULAR RAPID COMMUNICATIONS, vol. 29, 18 mars 2008 (2008-03-18), pages 562-566, XP002631833, DOI: 10.1002/marc.200700823**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention a trait à un procédé de préparation de polymères de masse et d'architecture contrôlées de type poly(N-vinyl lactame), utilisables en particulier en milieu aqueux.

On connaît à l'heure actuelle différents procédés de polymérisation radicalaire contrôlée, désignés notamment sous la terminologie RAFT ou MADIX, permettant d'obtenir des polymères à architecture et masse contrôlées. Ces procédés mettent généralement en oeuvre un procédé de transfert réversible par addition-fragmentation employant typiquement des agents de contrôle (dits également de transfert réversible), par exemple de type xanthate (composés porteurs de fonctions -S(C=S)O-). A titre d'exemples de tels procédé, il peut notamment être fait mention à ceux décrits dans WO96/30421, WO 98/01478, WO 99/35178, WO 98/58974, WO 00/75207 et WO 01/42312, WO 99/35177 ,WO 99/31144, FR2794464 ou WO 02/26836.

Ces procédés dits de « polymérisation radicalaire contrôlée » conduisent de façon bien connue à la formation de chaînes polymères qui croissent sensiblement toutes à la même vitesse, ce qui se traduit par une augmentation linéaire des masses moléculaires avec la conversion et une distribution des masses resserrée, généralement avec un nombre de chaînes sensiblement constant pendant toute la durée de la réaction, ce qui permet de contrôler très aisément la masse moléculaire moyenne du polymère synthétisé (cette masse est d'autant plus élevées que la concentration initiale en agent de contrôle est faible, cette concentration dictant le nombre de chaînes polymères en croissance).

Par ailleurs ces procédés sont également désignés par le terme de polymérisation « vivante », en ce sens qu'elles conduisent à des polymères dits « à caractère vivant », à savoir porteurs d'une extrémité de chaîne réactivable qui permet d'engager les polymères dans des réactions ultérieures de polymérisation radicalaire contrôlée.

Bien qu'efficace dans le cas le plus général, la mise en oeuvre de ces procédés s'avère aujourd'hui d'un intérêt limité pour la polymérisation de monomères de type N-vinyl lactames, tels que la N-vinylpyrrolidone (NVP)

En effet, il a été décrit différents types de réactions de polymérisation radicalaire s'efforçant, avec plus ou moins de succès, d'assurer un contrôle de la polymérisation de monomères de type N-vinyl lactames, mais ces procédés ne s'avèrent cependant pas pleinement satisfaisants, notamment lorsqu'on souhaite synthétiser des polymères destinés in fine à une utilisation au sein d'un milieu aqueux.

En particulier, il a été décrit des réactions de polymérisation de la NVP, de type MADIX, mettant en oeuvre des agents de contrôle porteurs de groupe thiocarbonylthio - S(C=S)- (tels que des xanthates).

Pour certains, ces procédés mettant en oeuvre des agents de contrôle de type xanthate sont réalisés en masse, à savoir en mettant en présence les monomères avec l'agent de transfert, en l'absence de solvant ou milieu dispersant additionnel. Ces méthodes de préparation en masse, du type décrit par exemple dans Macromolecules, 39, 7796-7797 (2006), induisent des milieux réactionnels de viscosité très élevée. Cette très haute viscosité constitue un frein à une exploitation industrielle du procédé et rend en outre difficile un contrôle efficace de la réaction de polymérisation. Elle peut en outre induire des phénomènes de prise en masse du milieu lorsque le taux de conversion du polymère devient très élevé qui inhibe, voire interdise, la possibilité de redisperser le polymère au sein d'un milieu dispersant.

D'autres polymérisations de la NVP, de type RAFT ou MADIX, ont été réalisés en milieu solvant organique, comme par exemple celui dont fait état l'article de Macromol. Symp., 229, 8-17 (2005). Les procédés de ce type présentent un autre inconvénient : ils conduisent à des polymères qui ne sont pas directement utilisables en milieu aqueux, et nécessitent donc des étapes supplémentaires de précipitation/redissolution dans l'eau, de basculement de solvants, et/ou de séchage, qui se traduisent notamment en termes d'augmentation du coût du procédé et/ou de répercussions environnementales.

Plus généralement, la polymérisation radicalaire de la NVP en présence d'agent de transfert de type xanthate est décrite dans la littérature comme inadaptée à la préparation efficace de polymères d'architecture correctement contrôlée et utilisables directement en milieu aqueux. En particulier, les difficultés rencontrées avec cette réaction sont évoqués dans Polym.Sci., Part A : Polym. Chem., 46, 6575-6593 (2008), cet article indiquant que la NVP subit des réactions secondaires intrinsèques qui nuisent à la réaction de polymérisation. Ce document écarte en outre la possibilité d'une polymérisation en milieu aqueux, en invoquant l'instabilité hydrolytique de l'agent de contrôle de type xanthate.

D'autres polymérisations contrôlées de monomères N-vinyl lactames ont été décrites, qui mettent en oeuvre d'autres agents de contrôle que les xanthates, et qui, elles non plus, ne conduisent pas à des polymères d'architecture suffisamment contrôlée et directement exploitables en milieu aqueux. En particulier, les articles publiés à ce sujet n'évoquent jamais une possible polymérisation contrôlée en milieu aqueux. Et pour cause : il s'avère que les conditions décrites dans ces documents ne sont effectivement pas transposables en milieu aqueux. Dans ce cadre, il peut notamment être fait référence aux publications parues dans Polymer, 48, 2835-2842 (2007) ; J. Polym.Sci., Part A : Polym. Chem. 2006, 44, 5719-5728 ; JACS,131, 2100 (2009) et Angew. Chem. Int. Ed., 46, 1304 (2007).

Un but de la présente invention est de fournir un procédé de préparation de polymères à base d'unités monomères N-vinyl lactames qui donne accès à la fois à un contrôle efficace de l'architecture du polymère et à la possibilité d'utiliser directement les polymères synthétisés en milieu aqueux. La notion de « polymères à base d'unités monomères N-vinyl lactames », au sens de la présente invention, englobe les poly(N-vinyl lactames) et, plus largement, les polymères comprenant au moins un bloc à base d'unités monomères N-vinyl lactames). Le contrôle de la polymérisation recherché selon l'invention vise en particulier l'architecture des blocs poly(N-vinyl lactame) constitutifs de tout ou partie du polymère synthétisé.

Pour atteindre l'objectif précité, il est proposé, selon la présente invention, un nouveau procédé de polymérisation radicalaire contrôlée de monomères N-vinyl lactames, qui est réalisable en milieu aqueux, et qui conduit à un contrôle efficace de la polymérisation, tout en fournissant des polymères qui sont directement utilisables en milieu aqueux.

Plus précisément, selon un premier aspect, la présente invention a pour objet un procédé de préparation d'un polymère à base d'unités monomères N-vinyl lactames, qui comprend une étape (E) de polymérisation radicalaire contrôlée d'une composition comprenant :

- des monomères contenant (et le plus souvent consistant en) des monomères N-vinyl lactame, identiques ou différents (et généralement identiques);
- un agent de contrôle de la polymérisation radicalaire, par exemple comprenant un groupe thiocarbonylthio -S(C=S)- ; et
- un initiateur de la polymérisation radicalaire qui est un système redox, comprenant un agent réducteur (Red) et un agent oxydant (Ox), où la différence entre les potentiels rédox standards de l'oxydant (Ox) et du réducteur (Red), à savoir la différence ($E_{ox}$-$E_{red}$), est d'au moins 1V;

où l'étape (E) est conduite en milieu aqueux.

Dans le cadre de la présente invention, les inventeurs ont mis en lumière que la mise en oeuvre de l'étape (E) définie ci-dessus permet de s'affranchir des inconvénients observés avec les procédés de polymérisation qui ont été divulgués dans l'état de la technique.

Plus précisément, les travaux qui ont été réalisés par les inventeurs ont maintenant permis de mettre en évidence que, de façon surprenante au vu des données de la littérature, il s'avère en fait possible de réaliser une polymérisation radicalaire d'unités monomères N-vinyl lactame à la fois en milieu aqueux et de façon efficacement contrôlée, sous réserve d'amorcer cette réaction radicalaire par le biais d'un système redox. Cette possibilité de polymérisation contrôlée en milieu aqueux ouvre la voie à la synthèse de poly(N-vinyl lactame) d'architecture très bien contrôlée et utilisables dans l'eau ou dans des milieux aqueux directement à l'issue de l'étape de polymérisation.

Compte tenu de la mise en oeuvre du système redox dans l'étape (E) cette étape est avantageusement conduite en milieu aqueux, typiquement en utilisant de l'eau à titre d'unique solvant. Elle permet ainsi d'obtenir un polymère directement en milieu aqueux sans avoir à utiliser de solvants, ce qui rend le procédé particulièrement adapté à une utilisation à l'échelle industrielle.

Les effets avantageux mis en évidence par les inventeurs dans le cadre de la présente invention sont, en général, d'autant plus marqués que la différence entre les potentiels redox standards de l'oxydant et du réducteur ($E_{ox}$-$E_{red}$) est importante. Notamment pour obtenir un flux de radicaux permettant une polymérisation jusqu'à des taux élevés de conversion, la différence entre les potentiels rédox standards de l'oxydant (Ox) et du réducteur (Red), à savoir la différence ($E_{ox}$-$E_{red}$), est d'au moins 1V, plus préférentiellement d'au moins 1,2 V, par exemple entre 1,3 et 2V.

Des resultats particulièrement intéressants ont notamment été observés lorsque l'agent de contrôle est porteur d'un groupe thiocarbonylthio -S(C=S)-, entre autres lorsqu'il s'agit d'un agent de contrôle porteur d'une fonction xanthate -S(C=S)O-, par exemple porteur d'une fonction O-ethyl xanthate de formule $-S(C=S)OCH_2CH_3$. Des avantages de même nature peuvent être observés avec d'autres agents de contrôle, comme par exemple les dithiocarbamates ou les trithiocarbonates.

Par ailleurs, notamment lorsque l'agent de contrôle est porteur d'un groupe thiocarbonylthio -S(C=S), les avantages obtenus sont notamment tout particulièrement nets lorsque les monomères N-vinyl lactame comprennent (et en particulier lorsqu'ils consistent en) des monomères N-vinylpyrrolidone (NVP).

Outre les avantages précités, la mise en oeuvre d'un amorceur de type redox dans l'étape (E) de polymérisation radicalaire contrôlée du procédé de l'invention présente accessoirement un autre intérêt non négligeable, à savoir que cette étape de polymérisation ne nécessite pas la mise en oeuvre de températures élevées. En particulier, la réaction de polymérisation de l'étape (E) peut être conduite à des températures bien inférieures aux températures de l'ordre de 60 à 80°C auxquelles est typiquement mise en oeuvre la réaction dans les procédés de l'état de la technique.

En plus d'un faible coût énergétique, il s'avère que cette possibilité de travailler à faible température permet de préserver le caractère vivant des chaînes polymères en formation, ce qui conduit à un contrôle encore amélioré de la réaction et autorise également la mise en oeuvre des polymères issus de l'étape (E) dans des étapes ultérieures de polymérisation avec d'autres monomères, pour synthétiser des polymères séquencés selon des techniques bien connues en soi. Plus précisément, les travaux effectués par les inventeurs dans le cadre de la présente invention ont permis de mettre en évidence que des températures de l'ordre de 60 à 80°C peuvent, si elles sont maintenues trop longtemps, dégrader les extrémités réactives des polymères en formation, en particulier lorsqu'on emploie des agents de contrôle de type xanthate. Notamment pour inhiber le plus possible une telle dégradation des extrémités réactives des polymères, il est préconisé de conduire l'étape (E) à une température inférieure à 40°C, plus préférentiellement à une température inférieure à 30°C. Avantageusement, l'étape (E) peut être conduite à température ambiante (de 10 à 30°C typiquement), ce qui présente, entre autres, l'avantage de ne pas avoir à mettre en oeuvre une étape de préchauffage préalable à la polymérisation, ce qui se traduit en termes de coûts de procédé réduits. L'étape (E) peut alternativement être conduite à des températures spécifiquement maintenues faibles, par exemples inférieures à 20°C, voire inférieures à 10°C.

La possibilité de conduire l'étape (E) à faible température permet par ailleurs d'envisager sa mise en oeuvre pour la polymérisation de la N-vinylcaprolactame (NVCL) en milieu aqueux (dans l'eau ou, avantageusement, dans un mélange d'eau et d'un solvant hydrosoluble), qui nécessite une polymérisation à une température inférieure à son point de trouble (« cloud point » en anglais) qui est de 32°C. Dans ce cadre, le procédé de l'invention peut notamment être mis en oeuvre pour la synthèse de poly(N-vinylcaprolactame ou de polymères amphiphiles à base à la fois d'unités monomères NVCL et NVP.

Différentes caractéristiques et modes de réalisation avantageux du procédé de l'invention vont maintenant être décrits plus en détails.

**<u>Les monomères N-vinyl lactame</u>**

Il s'agit de monomères éthyléniquement insaturés qui sont mis en oeuvre dans la réaction de polymérisation radicalaire contrôlée de l'étape (E). Typiquement, il s'agit de composés répondant à la formule suivante :

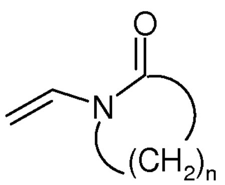

où n est un entier allant de 2 à 6, typiquement égal à 3 (N-vinyl pyrrolidone), 4 ou 5 (N-vinyl caprolactame).

De préférence, les monomères employés dans l'étape (E) comprennent de la N-vinyl pyrrolidone NVP. Selon un mode de réalisation particulier, l'ensemble des monomères employés dans l'étape (E) sont des monomères NVP.

D'autres monomères N-vinyl lactame peuvent également s'avérer avantageux selon l'invention, parmi lesquels on peut notamment citer, de façon non limitative, ou la N-vinylcaprolactame.

Selon un mode de réalisation possible, les monomères N-vinyl lactame peuvent être copolymérisés dans l'étape (E) en mélange avec d'autres monomères éthyléniquement insaturés non N-vinyl lactame, ce qui conduit typiquement à la formation d'un bloc polymère statistique ou à gradient lors de l'étape (E). Dans ce cas de figure, la teneur en monomères N-vinyl lactame reste généralement supérieure ou égale à 50%, plus préférentiellement supérieure ou égale à 70% (par exemple d'au moins 80%, voire d'au moins 90%), en masse par rapport à la masse totale de monomères mis en oeuvre dans l'étape (E).

Parmi les monomères éthyléniquement insaturés non N-vinyl lactame qu'il peut être intéressant de copolymériser avec les monomères N-vinyl lactame lors de l'étape (E), on peut notamment citer la N-vinylimidazole. D'autres monomères non N-vinyl lactame peuvent être employés, parmi lesquels on peut citer, de façon non limitative, l'acide acrylique, l'AMPS, l'APTAC, le N,N'dimethyl acrylamide NIPAM, le N,N-Diethyl acrylamide, le DADMAC (diallyl dimethyl ammonium chloride) l'acide vinylphosphonique, les phosphonates dialkylvinyliques, ou bien encore le vinyl sulfonate.

**<u>L'agent de contrôle</u>**

La plupart des agents de contrôle connus à ce jour en polymérisation radicalaire contrôlée peuvent être mis en oeuvre dans l'étape (E).

Selon une variante intéressante, l'agent de contrôle utilisé dans l'étape (E) est un composé porteur d'un groupe thiocarbonylthio -S(C=S)-. De préférence, il s'agit d'agent de contrôle RAFT ou MADIX. Selon un mode de réalisation particulier, l'agent de contrôle peut être porteur de plusieurs groupes thiocarbonylthio.

Il peut éventuellement s'agir d'une chaîne polymère porteuse d'un tel groupe. Ainsi, selon un mode de réalisation particulier, l'agent de contrôle employé dans l'étape (E) est un polymère vivant issu d'une étape ($E_0$) préalable dans laquelle on a réalisé la polymérisation radicalaire d'une composition comprenant :

- des monomères éthyléniquement insaturés ;
- un agent de contrôle de la polymérisation radicalaire comprenant au moins un groupe thiocarbonylthio -S(C=S)- ; et
- un initiateur de la polymérisation radicalaire (source de radicaux libres).

Selon ce mode de réalisation, l'étape (E) conduit à un copolymère séquencé comprenant au moins un bloc poly (N-vinyl lactame) lié à la chaîne polymère issue de la polymérisation de l'étape ($E_0$).

Ce mode de réalisation donne accès à des copolymères séquencés originaux. En particulier, le procédé de l'invention permet de synthétiser dans l'eau des polymères séquencés comprenant un bloc hydrophile associé un bloc poly(N-vinyl lactame), par exemple des copolymères diblocs type [bloc hydrophile]-[bloc PVP], par exemple de type [polyacrylamide]-[PVP], qui sont des polymères qui étaient jusqu'alors inaccessibles car la NVP était uniquement polymérisée en milieu non

aqueux. Ces polymères spécifiques, non décrits à ce jour à la connaissance de la Demanderesse, constituent un autre objet particulier de la présente invention.

Plus généralement, l'agent de contrôle mis en oeuvre dans l'étape (E) répond avantageusement à la formule (A) ci-dessous :

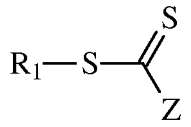

(A)

dans laquelle :

- Z représente :
  - un atome d'hydrogène,
  - un atome de Chlore,
  - un radical alkyl éventuellement substitué, aryl éventuellement substitué, ▪ un hétérocycle éventuellement substitué,
  - un radical alkylthio éventuellement substitué,
  - un radical arylthio éventuellement substitué,
  - un radical alkoxy éventuellement substitué,
  - un radical aryloxy éventuellement substitué,
  - un radical amino éventuellement substitué,
  - un radical hydrazine éventuellement substitué,
  - un radical alkoxycarbonyl éventuellement substitué,
  - un radical aryloxycarbonyl éventuellement substitué,
  - un radical carboxy, acyloxy éventuellement substitué,
  - un radical aroyloxy éventuellement substitué,
  - un radical carbamoyle éventuellement substitué,
  - un radical cyano,
  - un radical dialkyl- ou diaryl-phosphonato,
  - un radical dialkyl-phosphinato ou diaryl-phosphinato, ou
  - une chaîne polymère,

  et
- $R_1$ représente :
  - un groupe alkyle, acyle, aryle, aralkyle, alcène ou alcyne éventuellement substitué,
  - un cycle carboné ou un hétérocycle, saturé ou non, aromatique éventuellement substitué, ou
  - une chaîne polymère.

Les groupes $R_1$ ou Z, lorsqu'ils sont substitués, peuvent l'être par des groupes phényles éventuellement substitués, des groupes aromatiques éventuellement substitués, des cycles carbonés saturés ou non, des hétérocycles saturé ou non, ou des groupes : alkoxycarbonyle ou aryloxycarbonyle (-COOR), carboxy (-COOH), acyloxy ($-O_2CR$), carbamoyle ($-CONR_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino ($-NR_2$), halogène, perfluoroalkyle $C_nF_{2n+1}$, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (PEO, POP), les substituants cationiques (sels d'ammonium quaternaires), R représentant un groupe alkyle ou aryle, ou une chaîne polymère.

Selon un mode de réalisation particulier, $R_1$ est un groupe alkyle substitué ou non, de préférence substitué.

Les groupes alkyle, acyle, aryle, aralkyle ou alcyne éventuellement substitués présentent généralement 1 à 20 atomes de carbone, de préférence 1 à 12, et plus préférentiellement 1 à 9 atomes de carbone. Ils peuvent être linéaires ou ramifiés. Ils peuvent être également substitués par des atomes d'oxygène, sous forme notamment d'esters, des atomes de soufre ou d'azote.

Parmi les radicaux alkyle, on peut notamment citer le radical méthyle, éthyle, propyle, butyle, pentyle, isopropyle, tert-butyle, pentyle, hexyle, octyle, decyle ou dodécyle.

Les groupes alcynes sont des radicaux généralement de 2 à 10 atomes de carbone, ils présentent au moins une insaturation acétylénique, tel que le radical acétylenyle.

Le groupe acyle est un radical présentant généralement de 1 à 20 atomes de carbone avec un groupement carbonyle.

Parmi les radicaux aryle, on peut notamment citer le radical phényle, éventuellement substitué notamment par une fonction nitro ou hydroxyle.

Parmi les radicaux aralkyle, on peut notamment citer le radical benzyle ou phénéthyle, éventuellement substitué notamment par une fonction nitro ou hydroxyle.

Lorsque $R_1$ ou Z est une chaîne polymère, cette chaîne polymère peut être issue d'une polymérisation radicalaire ou ionique ou issue d'une polycondensation.

Dans le cadre de la présente invention, il est notamment intéressant d'employer à titre d'agents de contrôle des xanthates, des dithiocarbamates, ou des dithiocarbazates.

Avantageusement, on utilise, comme agent de contrôle dans l'étape (E), des composés xanthates, comme par exemple le O-ethyl-S-(1-methoxycarbonyl ethyl) xanthate de formule $(CH_3CH(CO_2CH_3))S(C=S)OCH_2CH_3$. S'avère notamment intéressant le composé commercialisé par la société Rhodia sous le nom de Rhodixan A1.

## Le système redox

Il comprend deux agents, à savoir l'agent oxydant et l'agent réducteur, qui peuvent être introduits simultanément ou bien consécutivement dans l'étape (E). Selon un mode de réalisation intéressant, les agents réducteur et oxydant sont introduit de façon séparée dans le milieu de l'étape (E), ce qui permet de retarder l'amorçage de la polymérisation jusqu'à l'introduction du second agent. Avantageusement, l'étape (E) est conduite (i) en formant d'abord un mélange comprenant l'un des agents oxydant ou réducteur en mélange avec les monomères et l'agent de contrôle puis (ii) en ajoutant à ce mélange l'autre agent (respectivement réducteur ou oxydant).

Comme indiqué plus haut dans la présente description, il est préconisé dans le cadre de l'invention que la différence entre les potentiels rédox standards de l'agent oxydant et de l'agent réducteur ($E_{ox}$-$E_{red}$) soit comprise entre 1 et 2 V.

Par ailleurs, notamment pour éviter des réactions d'oxydation des monomères N-vinyl lactame, il peut être intéressant que le potentiel redox standard d'oxydation $E_{ox}$ de l'agent oxydant (Ox) mis en oeuvre dans l'étape (E) soit inférieur (de préférence d'au moins 0,2V, plus préférentiellement d'au moins 0,5V, voire d'au moins 1V) à celui des monomères N-vinyl lactame employés. Plus généralement, il est préférable ue le potentiel redox standard d'oxydation $E_{ox}$ de l'agent oxydant (Ox) soit suffisamment faible pour ne pas oxyder les monomères N-vinyl lactame. Les monomères NVP sont tout particulièrement sensibles à l'oxydation et il est préférable, lorsqu'on polymèrise du NVP, que le potentiel d'oxydation $E_{ox}$ de l'agent oxydant soit inférieur à 2 V, plus préférentiellement inférieur à 1,8 V, par exemple entre 1,5 et 1,8 V. Des agents oxydant particulièrement bien adaptés dans ce cadre sont les hydroperoxydes, et notamment l'hydroperoxyde de tertbutyle (t-BuOOH), qui est notamment intéressant lorsqu'on polymérise des monomères NVP. Le peroxyde d'hydrogène est un autre agent oxydant possible.

D'autre part, notamment lorsque les monomères employés dans l'étape (E) sont des monomères de type NVP, il est préférable que les agents présents dans le système redox ne contiennent pas d'acides de nature à induire des réactions parasites des monomères propres à conduire à des sous produits non recherché, et plus généralement qu'ils ne contiennent pas de composés ayant un pKa suffisamment faible pour induire de telles réactions. Ainsi, de préférence, il est notamment préconisé d'employer des agents réducteur (Red) et oxydants (Ox) ayant un pKa supérieur à 4, plus préférentiellement supérieur à 6, voire à 6,5, et de préférence d'au moins 7, ce qui permet de réduire le taux de sous-produits, généralement à tout au plus quelques % dans le polymère synthétisé. Dans ce cadre, un agent réducteur particulièrement adapté est le sulfite de sodium (pKa=7,2), qui permet par exemple de limiter le taux de sous produits en deçà de 5% lors de la polymérisation de la NVP.

Des systèmes redox bien adaptés à la mise en oeuvre de l'étape (E) du procédé de l'invention comprennent de l'hydroperoxyde de tertbutyle (t-BuOOH) à titre d'agent oxydant, associé à un agent réducteur choisi parmi l'acide ascorbique ou le sulfite de sodium.

Le système redox hydroperoxyde de tertbutyle/sulfite de sodium s'avère tout particulièrement intéressant, notamment lorsque les monomères employés dans l'étape (E) sont ou comprennent des monomères NVP. L'emploi de ce système dans l'étape (E) permet de polymériser de la NVP à température ambiante et dans l'eau avec un très faible taux de sous-produits, restant typiquement bien inférieur à 5%.

## Utilisations des polymères synthétisés

Notamment lorsqu'elle est conduite dans les conditions préférentielles précitées, l'étape (E) du procédé de l'invention permet d'obtenir de façon rapide, simple et efficace des polymères à base d'unités monomères N-vinyl lactames qui sont directement employables en milieu aqueux avec un très bon contrôle de l'architecture des polymères synthétisés et une très bonne stabilité de la fonctionnalité terminale des polymères synthétisés (ce qui peut notamment être mis en évidence par analyse RMN $^1H$ et par spectrométrie de masse MALDI-TOF).

Compte tenu de l'intégrité et de la stabilité de leur extrémité réactive, les polymères obtenus selon l'étape (E) peuvent être utilisés à titre de polymères vivants pour la synthèse de copolymères séquencés comprenant le bloc synthétisé dans l'étape (E) associé à d'autres blocs. Dans ce cadre, les polymères obtenus dans l'étape (E) peuvent être utilisés à titre d'agents de contrôle dans une étape de polymérisation postérieure à l'étape (E).

Ainsi, selon un mode de réalisation particulier, le procédé de l'invention peut être un procédé pour la synthèse de copolymères séquencés qui comporte, après l'étape (E), une étape (E1) de polymérisation radicalaire contrôlée d'un mélange comprenant :

- tout ou partie du polymère tel qu'obtenu à l'issue de l'étape (E) ;
- des monomères éthyléniquement insaturés ; et
- une source de radicaux libres.

Ce mode de réalisation donne accès à des copolymères séquencés à base de poly(N-vinyl lactames) produit dans un milieu purement aqueux. En particulier, le procédé de l'invention permet de synthétiser dans l'eau des polymères séquencés comprenant deux blocs à base de monomères N-vinyl lactame.

Alternativement, en fonction des applications envisagée pour le polymère, il peut être souhaitable de

désactiver l'extrémité réactive du polymère obtenu à l'issue de l'étape (E). Selon cet autre mode de réalisation, le procédé comprend alors, après l'étape (E), une étape de traitement chimique de l'extrémité de chaîne, qui peut avantageusement être effectué directement dans l'eau à l'issue de l'étape (E). Par exemple, lorsque l'agent de contrôle employé dans l'étape (E) est un xanthate, l'extrémité réactive xanthate obtenue sur le polymère peut être désactivée pour priver le polymère de son caractère vivant, par exemple par action de peroxyde d'hydrogène qui oxyde l'extrémité réactive xanthate en diverses espèces oxydées (notamment de type thioester -S(C=O)- et - $SO_3H$). Selon un mode de réalisation intéressant, les extrémités réactives xanthates peuvent être désactivée par une simple augmentation de la température, ce qui permet de réaliser la désactivation de la fonction terminale sans avoir à utiliser une réactif chimique additionnel.

Les polymères préparés selon l'invention présentent un indice de polydispersité ($M_w/M_n$) typiquement bien inférieur à 1,8, et notamment inférieur ou égal à 1,6.

Les polymères préparés selon l'invention peuvent être des polymères monoblocs, statistiques ou à gradient.

Il peut alternativement s'agir de polymère de type séquencés, par exemple des polymères diblocs ou multiblocs (triblocs par exemple), en peigne, greffés, ou éventuellement en étoile. Pour ce faire, le procédé de l'invention contient avantageusement au moins une étape de polymérisation radicalaire contrôlée ($E_0$) du type précité avant l'étape (E) et/ou une étape ($E_1$) du type décrit plus haut dans la présente description, dans laquelle le polymère vivant synthétisé dans l'étape (E) est utilisé à titre d'agent de contrôle dans une réaction ultérieure de polymérisation radicalaire contrôlée.

Les polymères tels qu'obtenus selon l'invention trouvent, de par leur caractère hydrophile, des utilisations variées dans de multiples domaines. Ils peuvent entre autres être employés pour la formulation de compositions cosmétiques, des compositions de soin corporel, des compositions ingérables, des adhésifs, ou bien dans des applications plus spécifique (stabilisant de latex, pétrole, formulation de compositions biologiques ou médicales, etc). Ils sont également utiles pour le traitement de surface notamment en détergence, ou encore pour la formulation de compositions phytosanitaires ou destinées au domaine de l'agriculture.

L'invention et ses avantages seront encore davantage illustrés par les exemples de mise en oeuvre donnés ci-après.

**Exemple 1 : Synthèse selon l'invention d'une poly(NVP) de faible masse molaire - couple hydroperoxyde de tertbutyle / sulfite de sodium**

Dans un Schlenk de 15 mL à température ambiante (20°C), on a introduit 2 g de N-vinyl pyrrolidone, 1 g d'eau distillée, 150 mg de O-ethyl-S-(1-methoxycarbonyl ethyl) xanthate de formule $(CH_3CH(CO_2CH_3))S(C=S)OEt$ et 40 mg d'une solution d'hydroperoxyde de tertbutyle (70 % massique dans l'eau).

Le mélange réactionnel a été dégazé par bullage d'argon extra pur pendant 30 minutes. Ensuite, 40 mg de sulfite de sodium a été ajouté en une fois sous courant d'argon.

On a laissé le milieu réactionnel sous agitation pendant 24 heures à température ambiante.

A l'issue de la réaction, une conversion de 92 % a été déterminée par RMN $^1H$. La présence de l'extrémité xanthate est également observée en RMN $^1H$.

Une analyse en chromatographie d'exclusion stérique dans le DMF additivé de LiCl (0,1 N) avec un étalonnage relatif de poly(méthacrylate de méthyle) fournit les valeurs de masse molaire moyenne en nombre ($M_n$) et d'indice de polymolécularité ($M_w/M_n$) suivants :

$$M_n = 3\ 600\ g/mol \qquad M_w/M_n = 1{,}18.$$

Une analyse par spectrométrie MALDI-TOF avec la matrice 4-(4-nitrophenylazo)resorcinol sans agent cationisant confirme la structure du polymère attendu.

**Exemple 2 : Synthèse selon l'invention d'une poly(NVP) de haute masse molaire - couple hydroperoxyde de tertbutyle / sulfite de sodium**

Dans un Schlenk de 15 mL à température ambiante (20°C), on a introduit 2 g de N-vinyl pyrrolidone, 1 g d'eau distillée, 43 mg de O-ethyl-S-(1-methoxycarbonyl ethyl) xanthate de formule $(CH_3CH(CO_2CH_3))S(C=S)OEt$ et 40 mg d'une solution de hydroperoxyde de tertbutyle(70 % massique dans l'eau).

Le mélange réactionnel a été dégazé par bullage d'argon extra pur pendant 30 minutes. Ensuite, 40 mg de sulfite de sodium a été ajouté en une fois sous courant d'argon.

On a laissé le milieu réactionnel sous agitation pendant 24 heures à température ambiante.

A l'issue de la réaction, une conversion de 89 % a été déterminée par RMN $^1H$.

La présence de l'extrémité xanthate est également observée en RMN $^1H$.

Une analyse en chromatographie d'exclusion stérique dans le DMF additivé de LiCl (0,1 N) avec un étalonnage relatif de poly(méthacrylate de méthyle) fournit les valeurs de masse molaire moyenne en nombre ($M_n$) et d'indice de polymolécularité ($M_w/M_n$) suivants :

$$M_n = 22\ 700\ g/mol \qquad M_w/M_n = 1{,}4.$$

**Exemple 3 : Synthèse selon l'invention d'une poly(NVP) de faible masse molaire - couple hydroperoxyde de tertbutyle / acide ascorbique**

Dans un Schlenk de 15 mL à température ambiante (20°C), on a introduit 2 g de N-vinyl pyrrolidone, 1 g d'eau distillée, 230 mg de O-ethyl-S-(1-methoxycarbonyl ethyl) xanthate de formule $(CH_3CH(CO_2CH_3))S(C{=}S)OEt$ et 40 mg d'une solution de hydroperoxyde de tertbutyle(70 % massique dans l'eau.

Le mélange réactionnel a été dégazé par bullage d'argon extra pur pendant 30 minutes.

Ensuite, 45 mg d'acide ascorbique a étét ajouté en une fois sous courant d'argon.

On a laissé le milieu réactionnel sous agitation pendant 24 heures à température ambiante.

A l'issue de la réaction, une conversion de 98 % a été déterminée par RMN $^1H$. La présence de l'extrémité xanthate est également observée en RMN $^1H$.

Une analyse en chromatographie d'exclusion stérique dans le DMF additivé de LiCl (0,1 N) avec un étalonnage relatif de poly(méthacrylate de méthyle) fournit les valeurs de masse molaire moyenne en nombre ($M_n$) et d'indice de polymolécularité ($M_w/M_n$) suivants :

$$M_n = 3\,100 \text{ g/mol} \qquad M_w/M_n = 1{,}18.$$

Une analyse par spectrométrie MALDI-TOF avec la matrice 4-(4-nitrophenylazo)resorcinol sans agent cationisant confirme la structure du polymère attendu.

**Exemple 4 : Synthèse selon l'invention d'une poly(NVP) de haute masse molaire - couple hydroperoxyde de tertbutyle / acide ascorbique**

Dans un Schlenk de 15 mL à température ambiante, on a introdui 4 g de N-vinyl pyrrolidone, 2 g d'eau distillée, 21 mg de O-ethyl-S-(1-methoxycarbonyl ethyl) xanthate de formule $(CH_3CH(CO_2CH_3))S(C{=}S)OEt$ et 80 mg d'une solution de hydroperoxyde de tertbutyle(70 % massique dans l'eau).

Le mélange réactionnel a été dégazé par bullage d'argon extra pur pendant 30 minutes.

Ensuite, 90 mg d'acide ascorbique a été ajouté en une fois sous courant d'argon.

On a laissé le milieu réactionnel sous agitation pendant 24 heures à température ambiante.

A l'issue de la réaction, une conversion de 89 % a été déterminée par RMN $^1H$.

Une analyse en chromatographie d'exclusion stérique dans le DMF additivé de LiCl (0,1 N) avec un étalonnage relatif de poly(méthacrylate de méthyle) fournit les valeurs de masse molaire moyenne en nombre ($M_n$) et d'indice de polymolécularité ($M_w/M_n$) suivants :

$$M_n = 25\,500 \text{ g/mol} \qquad M_w/M_n = 1{,}5.$$

**Exemple 5 : Synthèse selon l'invention d'un copolymère dibloc poly(acide acrylique)-b-poly(N-vinyl pyrrolidone) - couple hydroperoxyde de tertbutyle/ sulfite de sodium**

5.1 : Synthèse d'un polymère poly(acide acrylique) vivant à terminaison xanthate (polymère P5)

Dans un ballon de 15 mL à température ambiante, on a introduit 4 g d'acide acrylique, 1,5 g d'eau distillée, 2 g d'éthanol, 1 g de O-ethyl-S-(1-methoxycarbonyl ethyl) xanthate de formule $(CH_3CH(CO_2CH_3))S(C{=}S)OEt$ et 25 mg d'acide 4,4'-Azobis(4-cyanovalérique).

Le mélange réactionnel a été dégazé par bullage d'argon extra pur pendant 30 minutes. Le ballon a ensuite été placé dans un bain d'huile thermostaté à 60°C et le milieu a été laissé sous agitation à cette température durant 3 heures.

A l'issue de la réaction, une conversion de 98 % a été déterminée par RMN $^1H$.

Une masse molaire en nombre $M_n$ = 800 g/mol est calculée par RMN $^1H$ pour le polymère P5 ainsi préparé.

5.2 : Synthèse du copolymère dibloc (utilisation de P5 comme agent de contrôle)

Le mélange réactionnel issu de l'étape 5.1 a été séché sous vide puis repris dans l'éthanol et précipité dans le diéthyléther. Le précipité obtenu a été séché sous vide pendant 24 heures afin d'éliminer les solvants résiduels, ce par quoi on a obtenu le polymère P5 sous forme d'une poudre.

105 mg de cette poudre a été introduits dans un Schlenk de 15 mL à température ambiante, puis on a ajouté 1 g de N-vinyl pyrrolidone, 2 g d'eau distillée et 40 mg d'une solution de hydroperoxyde de tertbutyle(70 % massique dans l'eau).

Le mélange réactionnel a été dégazé par bullage d'argon extra pur pendant 30 minutes. Ensuite, 40 mg de sulfite de sodium a été ajouté en une fois sous courant d'argon. La réaction a été laissée sous agitation 24 heures à température ambiante.

A l'issue de la réaction, une conversion de 100 % a été déterminée par RMN $^1H$.

En comparant l'analyse par RMN DOSY du polymère P5 et du copolymère issu de l'exemple, le caractère dibloc du copolymère est attesté en considérant la différence des coefficients de diffusion (D en $\mu m^2/s$) entre P5 et le copolymère final. Pour P5, D=203 $\mu m^2/s$ alors que pour le dibloc PAA-PVP, D=89 $\mu m^2/s$. De plus, la carte DOSY 2D des deux échantillons permet de visualiser que P5 a totalement réagi au cours de l'étape de

polymérisation de la NVP, pour être incorporé dans le dibloc PAA-PVP.

**Exemple 6 : Synthèse selon l'invention** d'un **copolymère dibloc poly(acide 2-acrylamido-2-methylpropane sulfonique)-b-poly(N-vinyl pyrrolidone) - couple hydroperoxyde de tertbutyle/ sulfite de sodium**

6.1 : : Synthèse d'un polymère poly(acide 2-acrylamido-2-methylpropane sulfonique) vivant à terminaison xanthate (polymère P6)

Dans un ballon de 25 mL à température ambiante, on a introduit 8 g d'une solution d'acide 2-acrylamido-2-methylpropane sulfonique (50 % massique dans l'eau), 4 g d'éthanol, 1 g de O-ethyl-S-(1-methoxycarbonyl ethyl) xanthate de formule $(CH_3CH(CO_2CH_3))S(C{=}S)OEt$ et 25 mg d'acide 4,4'-Azobis(4-cyanovalérique).

Le mélange réactionnel a été dégazé par bullage d'argon extra pur pendant 30 minutes.

Le ballon a ensuite été placé dans un bain d'huile thermostaté à 60°C et le milieu a été laissé sous agitation à cette température durant 3 heures.

A l'issue de la réaction, une conversion de 97 % a été déterminée par RMN $^1H$.

Une masse molaire en nombre $M_n$ = 1 800 g/mol est calculée par RMN $^1H$ pour le polymère P6 ainsi préparé.

6.2 : Synthèse du copolymère dibloc

Le mélange réactionnel issu de l'étape 6.1 a été séché sous vide puis repris dans l'éthanol et précipité dans le diéthyléther. Le précipité obtenu a été séché sous vide pendant 24 heures afin d'éliminer les solvants résiduels, ce par quoi on a obtenu le polymère P6 sous forme d'une poudre.

110 mg de cette poudre a été introduits dans un Schlenk de 15 mL à température ambiante, puis on a ajouté 1 g de N-vinyl pyrrolidone, 2 g d'eau distillée et 40 mg d'une solution d'hydroperoxyde de tertbutyle(70 % massique dans l'eau).

Le mélange réactionnel a été dégazé par bullage d'argon extra pur pendant 30 minutes. Ensuite, 40 mg de sulfite de sodium a été ajouté en une fois sous courant d'argon. La réaction a été laissée sous agitation 24 heures à température ambiante.

A l'issue de la réaction, une conversion de 99% a été déterminée par RMN $^1H$.

En comparant l'analyse par RMN DOSY du polymère P6 et du copolymère issu de l'exemple, le caractère dibloc du copolymère est attesté en considérant la différence des coefficients de diffusion (D en $\mu m^2/s$) entre P6 et le copolymère final. Pour P6, D=260 $\mu m^2/s$ alors que pour le dibloc PAA-PVP, D=66 $\mu m^2/s$. De plus, la carte DOSY 2D des deux échantillons permet de visualiser que P6 a totalement réagi au cours de l'étape de polymérisation de la NVP, pour être incorporé dans le dibloc PAMPS-PVP.

**Exemple 7 : Synthèse selon l'invention d'un copolymère dibloc poly(chlorure d'acrylamidopropyltrimethylammonium)-b-poly(N-vinyl pyrrolidone) - couple hydroperoxyde de tertbutyle/ sulfite de sodium**

7 1 : Synthèse d'un polymère poly(chlorure d'acrylamidopropyltrimethylammonium) vivant à terminaison xanthate (polymère P7)

Dans un ballon de 25 mL à température ambiante, on a introduit 4 g d'une solution de chlorure d'acrylamidopropyltrimethylammonium (75 % massique dans l'eau), 3 g d'eau distillée, 4,5 g d'éthanol, 750 mg de O-ethyl-S-(1-methoxycarbonyl ethyl) xanthate de formule $(CH_3CH(CO_2CH_3))S(C{=}S)OEt$ et 15 mg d'amorceur V-50 (2,2'-Azobis(2-méthyle-propionamidine) dihydrochloride).

Le mélange réactionnel a été dégazé par bullage d'argon extra pur pendant 30 minutes. Le ballon a ensuite été placé dans un bain d'huile thermostaté à 60°C et le milieu a été laissé sous agitation à cette température durant 3 heures.

A l'issue de la réaction, une conversion de 100 % a été déterminée par RMN $^1H$.

Une masse molaire en nombre $M_n$ = 1 500 g/mol est calculée par RMN $^1H$ pour le polymère P7 ainsi préparé.

7.2 : Synthèse du copolymère dibloc

Le mélange réactionnel issu de l'étape 7.1 a été séché sous vide puis repris dans l'éthanol et précipité dans le diéthyléther. Le précipité obtenu a été séché sous vide pendant 24 heures afin d'éliminer les solvants résiduels, ce par quoi on a obtenu le polymère P7 sous forme d'une poudre.

110 mg de cette poudre a été introduits dans un Schlenk de 15 mL à température ambiante, puis on a ajouté 1 g de N-vinyl pyrrolidone, 2 g d'eau distillée et 40 mg d'une solution de hydroperoxyde de tertbutyle(70 % massique dans l'eau).

Le mélange réactionnel a été dégazé par bullage d'argon extra pur pendant 30 minutes. Ensuite, 40 mg de sulfite de sodium a été ajouté en une fois sous courant d'argon. La réaction a été laissée sous agitation 24 heures à température ambiante.

A l'issue de la réaction, une conversion de 99 % a été déterminée par RMN $^1H$.

En comparant l'analyse par RMN DOSY du polymère P7 et du copolymère issu de l'exemple, le caractère dibloc du copolymère est attesté en considérant la différence des coefficients de diffusion (D en $\mu m^2/s$) entre P7 et le copolymère final. Pour P7, D=204 $\mu m^2/s$ alors que pour le dibloc PAA-PVP, D=63 $\mu m^2/s$. De plus, la

carte DOSY 2D des deux échantillons permet de visualiser que P7 a totalement réagi au cours de l'étape de polymérisation de la NVP, pour être incorporé dans le dibloc PAPTAC-PVP.

**Exemple 8 : Synthèse selon l'invention d'un copolymère dibloc poly(acrylamide)-b-poly(N-vinyl pyrrolidone) - couple hydroperoxyde de tertbutyle/ sulfite de sodium**

8.1 : Synthèse d'un polymère poly(acrylamide) vivant à terminaison xanthate (polymère P7)

10 g d'une solution d'acrylamide stabilisé au cuivre (50 % massique dans l'eau), 5,2 g d'éthanol, 1,2 g de O-ethyl-S-(1-methoxycarbonyl ethyl) xanthate de formule $(CH_3CH(CO_2CH_3))S(C=S)OEt$ et 160 mg d'une solution de hydroperoxyde de tertbutyle(70 % massique dans l'eau) ont été introduits dans un ballon de 25 mL à température ambiante.

Le mélange réactionnel a été dégazé par bullage d'argon extra pur pendant 30 minutes. Ensuite, 160 mg de sulfite de sodium a été ajouté en une fois sous courant d'argon. La réaction a été laissée sous agitation 24 heures à température ambiante.

A l'issue de cette réaction, une conversion de 86 % est déterminée par RMN $^1H$.

Une masse molaire en nombre $M_n$ = 1 200 g/mol est calculée par RMN $^1H$ pour le polymère P8 ainsi préparé.

8. 2 : Synthèse du copolymère dibloc

Le mélange réactionnel issu de l'étape 8.1 a été séché sous vide puis repris dans l'éthanol et précipité dans le diéthyléther. Le précipité obtenu a été séché sous vide pendant 24 heures afin d'éliminer les solvants résiduels, ce par quoi on a obtenu le polymère P8 sous forme d'une poudre.

100 mg de cette poudre a été introduits dans un Schlenk de 15 mL à température ambiante, puis on a ajouté 1 g de N-vinyl pyrrolidone, 2 g d'eau distillée et 40 mg d'une solution de hydroperoxyde de tertbutyle(70 % massique dans l'eau).

Le mélange réactionnel a été dégazé par bullage d'argon extra pur pendant 30 minutes. Ensuite, 40 mg de sulfite de sodium a été ajouté en une fois sous courant d'argon. La réaction a été laissée sous agitation 24 heures à température ambiante.

A l'issue de la réaction, une conversion de 99 % a été déterminée par RMN $^1H$

En comparant l'analyse par RMN DOSY du polymère P8 et du copolymère issu de l'exemple, le caractère dibloc du copolymère est attesté en considérant la différence des coefficients de diffusion (D en $\mu m^2/s$) entre P8 et le copolymère final. Pour P8, D=185 $\mu m^2/s$ alors que pour le dibloc PAm-PVP, D=63 $\mu m^2/s$. De plus, la carte DOSY 2D des deux échantillons permet de visualiser que P8 a totalement réagi au cours de l'étape de polymérisation de la NVP, pour être incorporé dans le dibloc PAm-PVP.

## Revendications

1. Procédé de préparation d'un polymère à base d'unités monomères N-vinyl lactames, qui comprend une étape (E) de polymérisation radicalaire contrôlée d'une composition comprenant :

   - des monomères contenant des monomères N-vinyl lactame, identiques ou différents ; et
   - un agent de contrôle de la polymérisation radicalaire ; et
   - un initiateur de la polymérisation radicalaire qui est un système rédox, comprenant un agent réducteur et un agent oxydant, où, la différence entre les potentiels rédox standards de l'oxydant et du réducteur ($E_{ox}$-$E_{red}$) est d'au moins 1 V,

   où l'étape (E) est conduite en milieu aqueux.

2. Procédé selon la revendication 1, où la différence entre les potentiels rédox standards de l'oxydant et du réducteur ($E_{ox}$-$E_{red}$) est d'au moins 1,2 V.

3. Procédé selon l'une des revendications 1 ou 2, où, dans l'étape (E), l'agent de contrôle est porteur d'un groupe thiocarbonylthio -S(C=S)-.

4. Procédé selon la revendication 3, où l'agent de contrôle est un composé porteur d'une fonction xanthate -S(C=S)O-, par exemple porteur d'une fonction -O-ethyl xanthate de formule $-S(C=S)OCH_2CH_3$.

5. Procédé selon la revendication 4, où l'agent de contrôle est le O-ethyl-S-(1-methoxycarbonyl ethyl)xanthate de formule $(CH_3CH(CO_2CH_3))S(C=S)OCH_2CH_3$.

6. Procédé selon l'une des revendications 1 à 5, où, dans l'étape (E), les monomères N-vinyl lactame sont des monomères N-vinylpyrrolidone (NVP).

7. Procédé selon l'une des revendications 1 à 6, où l'étape (E) est conduite à une température inférieure à 40°C, par exemple à température ambiante.

8. Procédé selon l'une des revendications 1 à 7, où le potentiel redox standard d'oxydation $E_{ox}$ de l'agent oxydant mis en oeuvre dans l'étape (E) est inférieur à celui des monomères N-vinyl lactame employés.

9. Procédé selon la revendication 8, où, dans l'étape (E), l'agent oxydant utilisé est l'hydroperoxide de tertbutyle (t-BuOOH).

**10.** Procédé selon l'une des revendications 1 à 9, où, dans l'étape (E), les agents réducteur et oxydant ont un pKa supérieur à 4.

**11.** Procédé selon l'une des revendications 1 à 9, où, dans l'étape (E), l'agent réducteur est le sulfite de sodium.

**12.** Procédé selon l'une des revendications 1 à 9, où, dans l'étape (E), l'agent réducteur est l'acide ascorbique.

**13.** Procédé selon l'une des revendications 1 à 9, où, dans l'étape (E), l'agent oxydant est l'hydroperoxide de tertbutyle (t-BuOOH) et l'agent réducteur est le sulfite de sodium.

**14.** Procédé selon l'une des revendications 1 à 9, où, dans l'étape (E), l'agent oxydant est l'hydroperoxide de tertbutyle (t-BuOOH) et l'agent réducteur est l'acide ascorbique.

**15.** Procédé selon l'une des revendications 1 à 14, pour la synthèse de copolymères séquencés, qui comporte, après l'étape (E), une étape (E1) de polymérisation radicalaire contrôlée d'un mélange comprenant :

- tout ou partie du polymère tel qu'obtenu à l'issue de l'étape (E) ;
- des monomères éthyléniquement insaturés ; et
- une source de radicaux libres.

**Patentansprüche**

**1.** Verfahren zur Herstellung eines Polymers auf Basis von N-Vinyllactam-Monomereinheiten, das einen Schritt (E) der kontrollierten radikalischen Polymerisation einer Zusammensetzung, umfassend:

- Monomere, die gleiche oder verschiedene N-Vinyllactam-Monomere enthalten; und
- ein Mittel zur Kontrolle der radikalischen Polymerisation und
- einen Initiator der radikalischen Polymerisation, bei dem es sich um ein Redoxsystem handelt, das ein Reduktionsmittel und ein Oxidationsmittel umfasst, wobei die Differenz zwischen den Standardredoxpotentialen des Oxidationsmittels und des Reduktionsmittels ($E_{ox}$-$E_{red}$) mindestens 1 V beträgt,

umfasst, wobei der Schritt (E) in wässrigem Medium durchgeführt wird.

**2.** Verfahren nach Anspruch 1, wobei die Differenz zwischen den Standardredoxpotentialen des Oxidationsmittels und des Reduktionsmittels ($E_{ox}$-$E_{red}$) mindestens 1, 2 V beträgt.

**3.** Verfahren nach einem der Ansprüche 1 oder 2, wobei in Schritt (E) das Kontrollmittel eine Thiocarbonylgruppe -S(C=S)- trägt.

**4.** Verfahren nach Anspruch 3, wobei es sich bei dem Kontrollmittel um eine Verbindung handelt, die eine Xanthatfunktion -S(C=S)0-, beispielsweise eine -O-Ethylxanthatfunktion der Formel $-S(C=S)OCH_2CH_3$, trägt.

**5.** Verfahren nach Anspruch 4, wobei es sich bei dem Kontrollmittel um O-Ethyl-S-(1-methoxycarbonylethyl)xanthat der Formel $(CH_3CH(CO_2CH_3))S(C=S)OCH_2CH_3$ handelt.

**6.** Verfahren nach einem der Ansprüche 1 bis 5, wobei es sich in Schritt (E) bei den N-Vinyllactam-Monomeren um N-Vinylpyrrolidon-Monomere (NVP-Monomere) handelt.

**7.** Verfahren nach einem der Ansprüche 1 bis 6, wobei der Schritt (E) bei einer Temperatur von weniger als 40°C, beispielsweise bei Umgebungstemperatur, durchgeführt wird.

**8.** Verfahren nach einem der Ansprüche 1 bis 7, wobei das Oxidation-Standardredoxpotential $E_{ox}$ des in Schritt (E) eingesetzten Oxidationsmittels kleiner als dasjenige der eingesetzten N-Vinyllactam-Monomere ist.

**9.** Verfahren nach Anspruch 8, wobei in Schritt (E) als Oxidationsmittel tert.-Butylhydroperoxid (t-BuOOH) eingesetzt wird.

**10.** Verfahren nach einem der Ansprüche 1 bis 9, wobei in Schritt (E) das Reduktionsmittel und das Oxidationsmittel einen pKa-Wert von mehr als 4 aufweisen.

**11.** Verfahren nach einem der Ansprüche 1 bis 9, wobei es sich in Schritt (E) bei dem Reduktionsmittel um Natriumsulfit handelt.

**12.** Verfahren nach einem der Ansprüche 1 bis 9, wobei es sich in Schritt (E) bei dem Reduktionsmittel um Ascorbinsäure handelt.

**13.** Verfahren nach einem der Ansprüche 1 bis 9, wobei es sich in Schritt (E) bei dem Oxidationsmittel um tert.-Butylhydroperoxid (t-BuOOH) und bei dem Reduktionsmittel um Natriumsulfit handelt.

**14.** Verfahren nach einem der Ansprüche 1 bis 9, wobei es sich in Schritt (E) bei dem Oxidationsmittel um

tert.-Butylhydroperoxid (t-BuOOH) und bei dem Reduktionsmittel um Ascorbinsäure handelt.

**15.** Verfahren nach einem der Ansprüche 1 bis 14 zur Synthese von Blockcopolymeren, das nach Schritt (E) einen Schritt (E1) der kontrollierten radikalischen Polymerisation einer Mischung, umfassend:

- das gesamte am Ende von Schritt (E) erhaltene Polymer oder einen Teil davon;
- ethylenisch ungesättigte Monomere und
- eine Radikalquelle,

umfasst.

## Claims

**1.** Process for preparing a polymer based on N-vinyllactam monomer units, which comprises a step (E) of controlled free-radical polymerization of a composition comprising:

- monomers containing N-vinyllactam monomers, which are identical or different, and
- a control agent for the free-radical polymerization, and
- a free-radical polymerization initiator, which is a redox system comprising a reducing agent and an oxidizing agent, in which the difference between the standard redox potentials of the oxidizer and the reducer ($E_{ox}$-$E_{red}$) is at least 1 V,

in which step (E) is carried out in aqueous medium.

**2.** Process according to Claim 1, in which the difference between the standard redox potentials of the oxidizer and the reducer ($E_{ox}$-$E_{red}$) is at least 1.2 V.

**3.** Process according to one of Claims 1 and 2, in which, in step (E), the control agent bears a thiocarbonylthio group -S(C=S)-.

**4.** Process according to Claim 3, in which the control agent is a compound bearing a xanthate function -S(C=S)O-, for example bearing an -0-ethyl xanthate function of formula $-S(C=S)OCH_2CH_3$.

**5.** Process according to Claim 4, in which the control agent is O-ethyl-S-(1-methoxycarbonylethyl) xanthate of formula $(CH_3CH(CO_2CH_3))S(C=S)OCH_2CH_3$.

**6.** Process according to one of Claims 1 to 5, in which, in step (E), the N-vinyllactam monomers are N-vinylpyrrolidone (NVP) monomers.

**7.** Process according to one of Claims 1 to 6, in which step (E) is carried out at a temperature lower than 40ºC, for example at room temperature.

**8.** Process according to one of Claims 1 to 7, in which the standard redox potential of oxidation $E_{ox}$ of the oxidizing agent used in step (E) is less than that of the N-vinyllactam monomers used.

**9.** Process according to Claim 8, in which, in step (E), the oxidizing agent used is tert-butyl hydroperoxide (t-BuOOH).

**10.** Process according to one of Claims 1 to 9, in which, in step (E), the reducing and oxidizing agents have a $pK_a$ greater than 4.

**11.** Process according to one of Claims 1 to 9, in which, in step (E), the reducing agent is sodium sulfite.

**12.** Process according to one of Claims 1 to 9, in which, in step (E), the reducing agent is ascorbic acid.

**13.** Process according to one of Claims 1 to 9, in which, in step (E), the oxidizing agent is tert-butyl hydroperoxide (t-BuOOH) and the reducing agent is sodium sulphite.

**14.** Process according to one of Claims 1 to 9, in which, in step (E), the oxidizing agent is tert-butyl hydroperoxide (t-BuOOH) and the reducing agent is ascorbic acid.

**15.** Process according to one of Claims 1 to 14, for the synthesis of block copolymers, which comprises, after step (E), a step (E1) of controlled free-radical polymerization of a mixture comprising:

- all or a portion of the polymer as obtained at the end of step (E),
- ethylenically unsaturated monomers, and
- a source of free radicals.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 9630421 A
- WO 9801478 A
- WO 9935178 A
- WO 9858974 A
- WO 0075207 A
- WO 0142312 A
- WO 9935177 A
- WO 9931144 A
- FR 2794464
- WO 0226836 A


### Littérature non-brevet citée dans la description


- *Macromolecules,* 2006, vol. 39, 7796-7797
- *Macromol. Symp.,* 2005, vol. 229, 8-17
- Polym.Sci. *Polym. Chem.,* 2008, vol. 46, 6575-6593
- *Polymer,* 2007, vol. 48, 2835-2842
- J. Polym.Sci. *Polym. Chem.,* 2006, vol. 44, 5719-5728
- *JACS,* 2009, vol. 131, 2100
- *Angew. Chem. Int. Ed.,* 2007, vol. 46, 1304